# EUROPEAN PATENT SPECIFICATION

(11) **EP 2 157 727 B1**
(45) Date of publication and mention of the grant of the patent: **14.06.2017**
(21) Application number: 09165287.5
(22) Date of filing: 13.07.2009
(51) Int. Cl.: H04L 12/00

(54) **Wireless Base Station Applying Echo-Message**
Drahtlose Basestation wendet Echo-Nachricht an
Radio Base Station applicant un message d'echo

(30) Priority: 20.08.2008 JP 2008211589
(43) Date of publication of application: 24.02.2010
(73) Proprietor: NEC Corporation, Minato-ku Tokyo 108-8001 (JP)
(72) Inventor: Sakai, Toshiki, Tokyo 108-8001 (JP)
(74) Representative: Vossius & Partner Patentanwälte Rechtsanwälte mbB

(56) References cited:
- US-A1- 2003 185 208
- US-A1- 2007 076 618
- MOGUL J ET AL: "IETF: RFC1191 - Path MTU Discovery" INTERNET CITATION, [Online] XP002124247 Retrieved from the Internet: URL:http://www.rfc-editor.org/rfcsearch.ht ml> [retrieved on 1999-11-29]

## Description

The present invention relates to a wireless base station for transmitting and receiving data packets, a wireless communication system, and a path connection method and a program in the wireless base station.

Generally, between communication apparatuses that transmit and receive data packets (hereinafter referred to as packets) to and from each other, the maximum length of packets allowed to be transmitted and received (MTU: Maximum Transmission Unit) is predetermined depending on the communication protocol between the communication apparatuses. Packets are transmitted and received according to the MTU.

This causes no problem in the case of transmitting and receiving packets between two communication apparatuses. However, typical communication systems often have a number of types of communication apparatuses connected in multiple stages. Therefore, the MTUs between the communication apparatuses may not be the same value. For example, if the size of a packet received from a communication apparatus in the preceding stage is larger than the MTU for transmitting the packet to a communication apparatus in the next stage, the packet needs to be fragmented before being transmitted to the next stage.

However, if, for example, a flag in the header of an IP (Internet Protocol) packet indicating whether the packet can be fragmented specifies that fragmentation is impossible (a DF [Don't Fragment] bit = ON), the packet cannot be fragmented. Therefore, the packet is discarded.

As a technique for solving this problem, path MTU discovery is disclosed in RFC 1191 (Path MTU Discovery), November 1990.

Operations in the path MTU discovery will be briefly described below.

Referring to FIG. 1, a system including communication terminals 900 and 920 and router 910 is shown.US 2007/0076618 A discloses such a system.

Each of communication terminals 900 and 920 is a communication terminal such as a general PC (Personal Computer) with a communication function.

Router 910 is a general router by which packets transmitted from communication terminal 900 are forwarded to communication terminal 920.

The MTU between communication terminal 900 and router 910 is 4352 bytes. The MTU between router 910 and communication terminal 920 is 1500 bytes.

Here, if a 4352-byte packet which has its DF bit in the ON state and whose destination is communication terminal 920, is transmitted from communication terminal 900 to router 910, an error message is transmitted from router 910 to communication terminal 900.

For this error message, ICMP (Internet Control Message Protocol) is used. Specifically, an ICMP message (Type code: 3, Code number: 4) indicating the impossibility of forwarding the packet to the destination, i.e., to communication terminal 920, is transmitted from router 910 to communication terminal 900. This message includes the value of the MTU between router 910 and communication terminal 920.

This allows communication terminal 900 to recognize the size of packets to be transmitted, so that fragmented packets of that size generated by fragmentation are transmitted from communication terminal 900 to router 910. These packets are then transmitted from router 910 to communication terminal 920.

In this manner, at the sender side, the size of packets to be transmitted can be set to a size that conforms to the MTU of the communication path.

Now, as one of various systems that has recently generated attention as the new wireless technologies, a WiMAX (Worldwide Interoperability for Microwave Access) system exists.

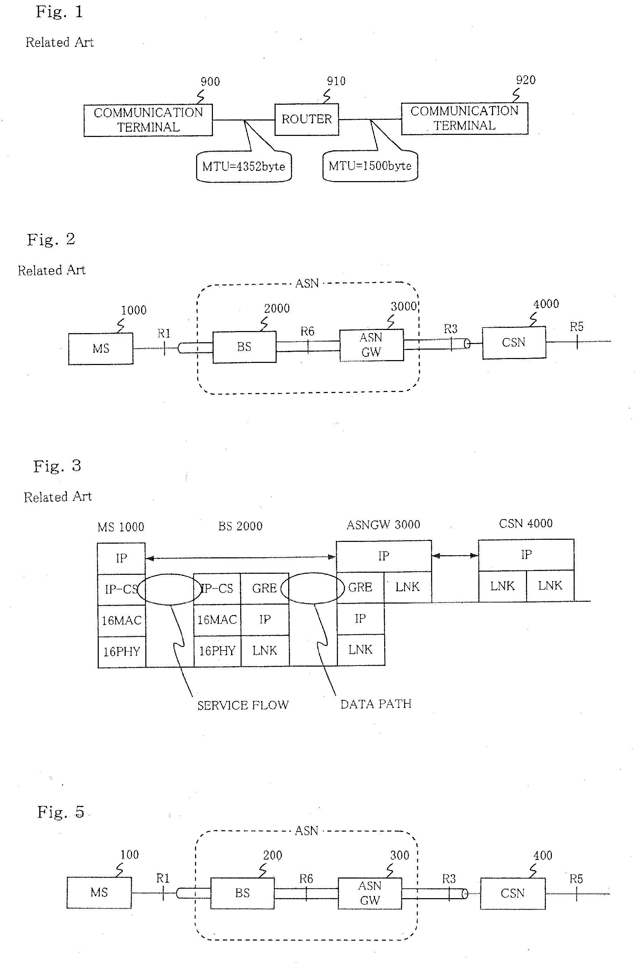

Referring to FIG. 2, a WiMAX system provided with MS 1000, BS 2000, ASNGW 3000, and CSN 4000 is shown.

MS (Mobile Station) 1000 is a mobile communication terminal with a wireless communication function.

BS (Base Station) 2000 is a wireless base station adapted to be connectable with MS 1000.

ASNGW (Access Service Network GateWay) 3000 is a gateway apparatus that manages BS 2000 and connects BS 2000 and CSN 4000.

CSN (Connectivity Service Network) 4000 is a network for connecting ASNGW 3000 and an apparatus above ASNGW 3000.

BS 2000 and ASNGW 3000 form an ASN (Access Service Network).

Here, a connection point between MS 1000 and BS 2000 is defined as R1 (Reference point 1). A connection point between BS 2000 and ASNGW 3000 is defined as R6 (Reference point 6). A connection point between ASNGW 3000 and CSN 4000 is defined as R3 (Reference point 3). A connection point between CSN 4000 and another network is defined as R5 (Reference point 5).

As shown in FIG. 3, protocols for MS 1000 shown in FIG. 2 include, from the bottom layer, 16PHY (16-PHYsical layer), 16MAC (16-Medium Access Control), IP-CS (IP-Convergence Sublayer), and IP. Protocols for BS 2000 to communicate with MS 1000 include, from the bottom layer, 16PHY, 16MAC, and IP-CS. Protocols for BS 2000 to communicate with ASNGW 3000 include, from the bottom layer, LNK (indicating a data link (Data LINK) layer protocol, which is typically Ethernet), IP, and GRE (Generic Routing Encapsulation). Protocols for ASNGW 3000 to communicate with BS 2000 include, from the bottom layer, LNK, IP, and GRE. The IP protocol is further stacked thereon, but the IP protocol is not used in BS 2000 and therefore it is a communication protocol used for communication with MS 1000. Protocols for ASNGW 3000 to communicate with CSN 4000 include, from the bottom layer, LNK and IP.

In the WiMAX system, a service flow is established between MS 1000 and BS 2000 when MS 1000 connects to BS 2000. A data path associated with this service flow is also established between BS 2000 and ASNGW 3000. Data communication of MS 1000 is performed through these service flow and data path, where uplink communication and downlink communication are independent from each other and can be distinctively established according to information about communicated IP datagrams (IP packets).

This data path in the WiMAX system substantially encapsulates IP data of the MS by an IP tunneling technique such as GRE, as shown in FIG. 3. Here, the MTU of GRE tunnel is 1472 bytes.

The WiMAX system takes an approach in which a system manager or the like manually sets the size (the packet length) of IP packets to be transmitted from MS 1000 to a size that conforms to the MTU of the GRE tunnel, i.e., 1472 bytes. However, setting each time the size of packets to be transmitted is troublesome.

Therefore, it is preferable to use the above-described path MTU discovery function so that the size (the packet length) of IP packets to be transmitted from MS 1000 is automatically set.

When the path MTU discovery function is used in the WiMAX system, the size of a packet to be transmitted first from MS 1000 is 1500 bytes and the DF bit is ON. The MTU of the GRE tunnel is 1472 bytes. Therefore, an apparatus (BS 2000 in the case of FIG. 2) to which the packet is transmitted from MS 1000 needs to use ICMP to notify MS 1000 to reduce the size of the packet to be transmitted.

However, BS 2000 in the WiMAX system is not provided with a routing function but is simply provided with a function of associating the service flow and the data path and forwarding an IP packet. Also, as described above, the uplink and the downlink of the service flow and the data path are independent from each other. Therefore, it is difficult to transmit an ICMP message to MS 1000 in response to the 1500-byte packet transmitted from MS 1000.

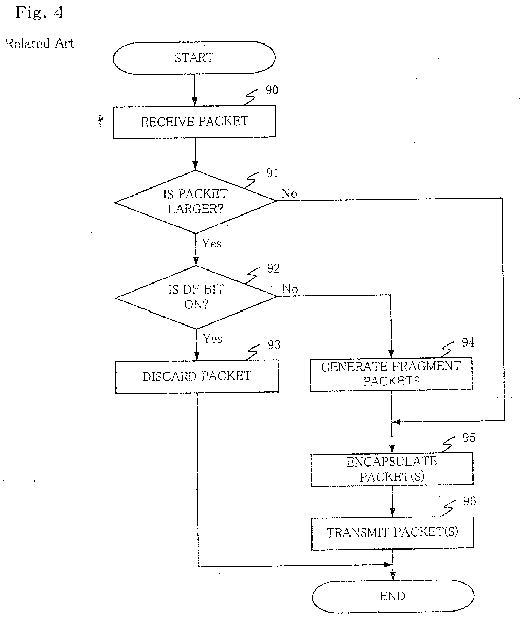

Processing in a case where the path MTU discovery in BS 2000 shown in FIG. 2 is performed in the WiMAX system will be described with reference to FIG. 4.

When a 1500-byte packet transmitted from MS 1000 for performing the path MTU discovery is received at BS 2000 in step 90, it is determined whether the size of the packet is larger than the MTU of GRE in step 91.

If it is determined that the size of the packet is larger than the MTU of GRE, it is determined whether the DF bit in the packet is ON in step 92.

Since the DF bit in the packet transmitted for performing the path MTU discovery is ON, it is determined that the packet cannot be fragmented, and the packet is discarded in step 93.

On the other hand, if it is determined that the DF bit is not ON in step 92, the packet is fragmented in step 94 to conform to the MTU of GRE. This is not a packet transmitted for performing the path MTU discovery.

If it is determined in step 91 that the size of the packet is not larger than the MTU of GRE, the packet is encapsulated in step 95 for using GRE and transmitted to ASNGW 3000 in step 96.

Since packets for which "No" is determined in the processing in these steps 91 and 92 are not packets transmitted for performing the path MTU discovery, these packets are irrelevant to problems related to the path MTU discovery.

Thus, the packet transmitted from MS 1000 for performing path MTU discovery is larger in size than the MTU of GRE and also has its DF bit in the ON state (cannot be fragmented), so that the packet is discarded in BS 2000. A problem is that MS 1000 therefore cannot recognize that the packet has been discarded and cannot detect the path MTU.

An object of the present invention is to provide a wireless base station, wireless communication system, path connection method, and program for solving the above-described problem.

To accomplish the above object, the present invention includes a wireless base station as defined in claim 1. The present invention also includes a method in a wireless base station as defined in claim 8. The present invention also includes a recording medium for recording a program for causing a wireless base station as defined in claim 12. The invention further relates to a wireless base station as defined in dependent claims 2 - 7, a method in a wireless base station as defined in dependent claims 9 - 11, and a recording medium for recording a program for causing a wireless base station as defined in dependent claims 13 - 15.

Thus, as described above, in the present invention, if a packet received from a communication terminal is larger in size than a maximum transmission unit used between a wireless base station and a gateway apparatus and also if it cannot be fragmented, an echo request packet of a size not larger than the maximum transmission unit is generated and transmitted to the gateway apparatus. Thereafter, if an echo reply packet corresponding to the echo request packet is received from the gateway apparatus, an ICMP data packet including the value of the maximum transmission unit is generated and transmitted to the communication terminal. With such a configuration, the communication terminal can automatically recognize the maximum transmission unit that allows high transmission efficiency.

The above and other objects, features, and advantages of the present invention will become apparent from the following description with reference to the accompanying drawings which illustrate an example of the present invention.
FIG. 1 is a diagram showing an exemplary embodiment of a system in which three communication apparatuses are connected;
FIG. 2 is a diagram showing an exemplary embodiment of a typical WiMAX system;
FIG. 3 is a diagram showing protocol stacks in the WiMAX system shown in FIG. 2;
FIG. 4 is a flowchart for describing processing in a case where path MTU discovery in a BS shown in FIG. 2 is performed;
FIG. 5 is a diagram showing an exemplary embodiment of a wireless communication system (WiMAX system) in which a wireless base station of the present invention is connected;
FIG. 6 is a diagram showing an example of an internal configuration of a BS shown in FIG. 5;
FiG. 7 is a sequence diagram for describing a path connection method in the exemplary embodiment shown in FIG. 5 (including FIG. 6);
FIG. 8 is a flowchart for describing details of processing in step 2 in the sequence diagram shown in FIG. 7;
FIG. 9 is a diagram showing an example of an internal configuration of a storage unit shown in FIG. 6; and
FIG. 10 is a flowchart for describing details of processing in step 3 in the sequence diagram shown in FIG. 7.

### Exemplary Embodiment

Referring to FIG. 5, an exemplary embodiment of a wireless communication system (WiMAX system) including MS 100, BS 200, ASNGW 300, and CSN 400 is shown.

MS (Mobile Station) 100 is a mobile communication terminal with a wireless communication function.

BS (Base Station) 200 is a wireless base station of the present invention adapted to be connectable with MS 100.

ASNGW (Access Service Network GateWay) 300 is a gateway apparatus that manages BS 200 and connects BS 200 and CSN 400. GRE encapsulation is used to transmit and receive packets between BS 200 and ASNGW 300. Therefore, the MTU between BS 200 and ASNGW 300 is 1472 bytes.

CSN (Connectivity Service Network) 400 is a network for connecting ASNGW 300 and an apparatus above ASNGW 300.

BS 200 and ASNGW 300 form an ASN.

Here, a connection point between MS 100 and BS 200 is defined as R1 (Reference point 1). A connection point between BS 200 and ASNGW 300 is defined as R6 (Reference point 6). A connection point between ASNGW 300 and CSN 400 is defined as R3 (Reference point 3). A connection point between CSN 400 and another network is defined as R5 (Reference point 5).

GRE tunneling (encapsulation) is used to communicate IP packets (IP datagrams) between BS 200 and ASNGW 300.

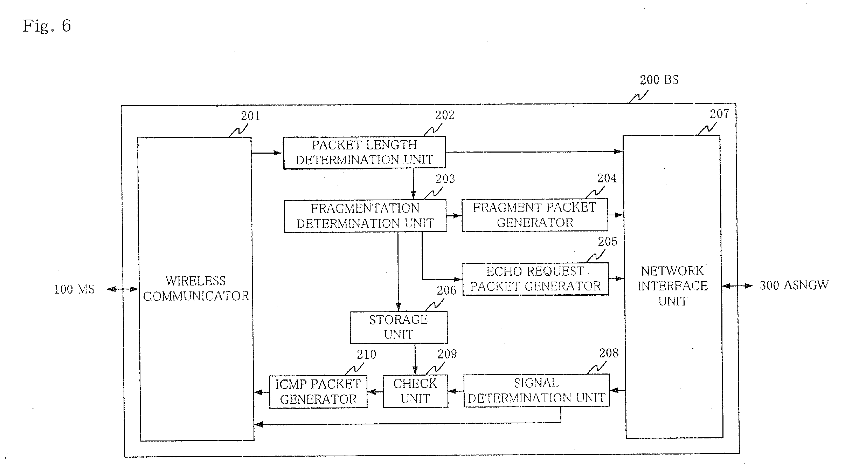

As shown in FIG. 6, BS 200 shown in FIG. 5 is provided with wireless communicator 201, packet length determination unit 202, fragmentation determination unit 203, fragment packet generator 204, echo request packet generator 205, storage unit 206, network interface unit 207, signal determination unit 208, check unit 209, and ICMP packet generator 210.

Wireless communicator 201 includes wireless communication interface functions for wirelessly communicating with MS 100. For example, an antenna and a modulation/demodulation function are included.

Packet length determination unit 202 compares the size (the packet length) of a packet received from MS 100 via wireless communicator 201 with the MTU between BS 200 and ASNGW 300.

Fragmentation determination unit 203 determines whether the DF bit of a packet received from MS 100 via wireless communicator 201 is ON. Here, this determination is made for a packet received from MS 100 via wireless communicator 201 and determined by packet length determination unit 202 as larger in size than the MTU between BS 200 and ASNGW 300.

Fragment packet generator 204 fragments a packet received from MS 100 via wireless communicator 201 and determined by fragmentation determination unit 203 as not having its DF bit ON, into packets of a size that conforms to the MTU between BS 200 and ASNGW 300.

Echo request packet generator 205 generates an ICMP echo request packet defined in the ICMP protocol for a packet received from MS 100 via wireless communicator 201 and determined by fragmentation determination unit 203 as having its DF bit ON. An ICMP echo request packet is a packet for requesting confirmation as to whether the packet has reached the destination, and it is an ICMP packet with the Type code "8." The size of the ICMP echo request packet is not larger than the MTU between BS 200 and ASNGW 300. In the present invention, special check information is included in the ICMP echo request packet. Details of this will be described later.

Storage unit 206 stores a packet received from MS 100 via wireless communicator 201. Here, a packet determined by fragmentation determination unit 203 as having its DF bit ON is stored. At this point, the packet is stored along with associated identification information (ID: Identifier) for identifying MS 100 that has transmitted the packet.

Network interface unit 207 uses the GRE tunneling technique to encapsulate a packet to be transmitted to ASNGW 300. Network interface unit 207 then transmits the encapsulated packet to ASNGW 300. Network interface unit 207 also decapsulates a packet encapsulated by using the GRE tunneling technique and received from ASNGW 300, and outputs the decapsulated packet to signal determination unit 208.

Signal determination unit 208 determines whether a packet output from network interface unit 207 is an ICMP echo reply packet. If it is determined that the packet is an ICMP echo reply packet, signal determination unit 208 outputs the packet to check unit 209. On the other hand, if it is determined that the packet is not an ICMP echo reply packet, signal determination unit 208 outputs the packet to wireless communicator 201. An ICMP echo reply packet is a packet for replying to confirm whether a packet has reached destination, and it is an ICMP packet with the Type code "0."

Check unit 209 matches check information included in the ICMP echo reply packet output from signal determination unit 208 with information about the IP packet stored in storage unit 206. That is, check unit 209 determines whether the ICMP echo reply packet output from signal determination unit 208 is a reply to the ICMP echo request packet generated by echo request packet generator 205. If it is determined that the ICMP echo reply packet output from signal determination unit 208 is a reply to the ICMP echo request packet generated by echo request packet generator 205, the ICMP echo reply packet is output to ICMP packet generator 210.

Based on the ICMP echo reply packet output from check unit 209, ICMP packet generator 210 generates an ICMP packet (an ICMP data packet) to be transmitted to MS 100. This ICMP packet is in compliance with RFC 1191 (Path MTU Discovery), November 1990, and notifies that the packet received from MS 100 cannot reach ASNGW 300, that is, the size of the packet is too large (Too-Big-Message). Specifically, it is an ICMP packet with the Type code "3" and the Code number "4." The ICMP packet may be of any size not larger than the MTU between MS 100 and BS 200, and may be of the same size as the packet received from MS 100. The ICMP packet includes the value of the MTU between BS 200 and ASNGW 300.

It is to be noted that FIG. 6 shows only those relevant to the present invention among components of BS 200 shown in FIG. 5.

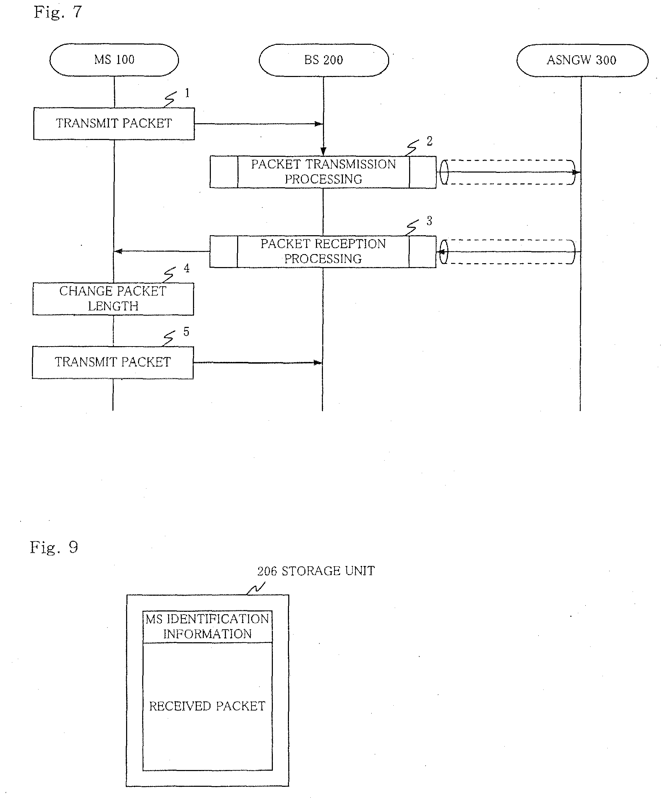

A path connection method in the above exemplary embodiment will be described below with reference to FIG. 7.

First, in step 1, a 1500-byte packet is transmitted from MS 100 to BS 200 for discovering the MTU between BS 200 and ASNGW 300. Here, the packet transmitted for discovering the MTU has its DF bit set to ON. Specifically, it is a packet in which the first bit of Flag bits in the IP header is "1 (indicating the impossibility of fragmentation)."

Then in step 2, processing of transmitting a packet to ASNGW 300 is performed in BS 200 based on the packet received from MS 100.

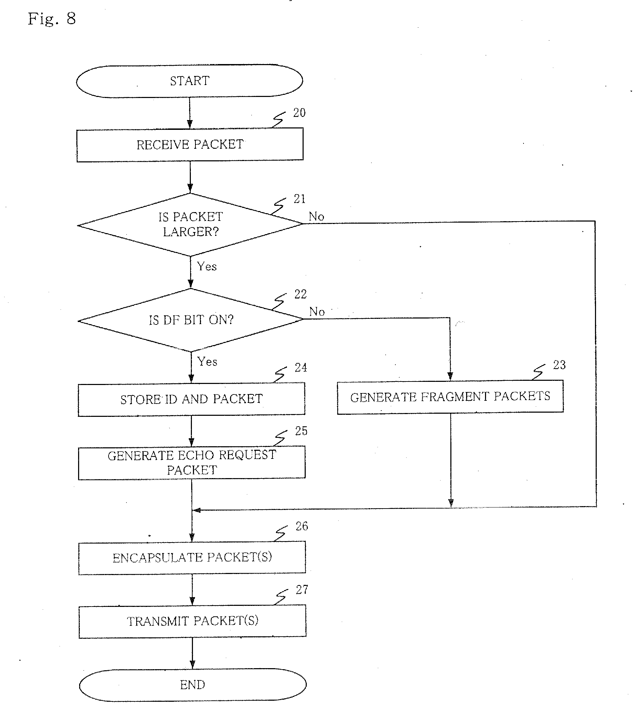

Details of this processing in step 2 will be described with reference to FIG. 8.

When the packet transmitted from MS 100 is received in wireless communicator 201 in step 20, the packet is converted into an electric signal in wireless communicator 201 and output to packet length determination unit 202.

In step 21, it is determined in packet length determination unit 202 whether the size of the packet output from wireless communicator 201 is larger than a predetermined size. Here, the predetermined size is the MTU between BS 200 and ASNGW 300. Also here, the size (the packet length) of the packet transmitted from MS 100 is 1500 bytes, and the MTU between BS 200 and ASNGW 300 is 1472 bytes. Therefore, it is determined that the size of the packet output from wireless communicator 201 is larger than the MTU between BS 200 and ASNGW 300. The packet output from wireless communicator 201 and determined as larger in size than the MTU between BS 200 and ASNGW 300 is output from packet length determination unit 202 to fragmentation determination unit 203.

On the other hand, if it is determined that the size of the packet output from wireless communicator 201 is not larger than the MTU between BS 200 and ASNGW 300, the packet is transmitted to ASNGW 300 via network interface unit 207.

Then in step 22, it is determined in fragmentation determination unit 203 whether the DF bit of the packet output from packet length determination unit 202 is ON. Whether the DF bit is ON is determined based on whether the first bit of the Flag bits in the IP header is "1 (indicating the impossibility of fragmentation)." If the first bit of the Flag bits in the IP header is "1," it is determined that the DF bit of the packet output from packet length determination unit 202 is ON.

If it is determined that the DF bit of the packet output from packet length determination unit 202 is not ON, the packet is fragmented by fragment packet generator 204 into packets of a size that conforms to the MTU for ASNGW 300 in step 23. The packets are transmitted to ASNGW 300 via network interface unit 207.

Here, since the DF bit of the packet received from MS 100 is ON, the packet is stored in storage unit 206 in step 24. At this point, identification information for identifying MS 100 that has transmitted the packet and for identifying the timing of the reception by BS 200 is stored in association with the packet. This identification information for identifying MS 100 may be any information that allows MS 100 to be identified, for example information for identifying the sender MS included in the header of the packet and the reception time.

As shown in FIG. 9, the received packet and the identification information about the MS that transmitted the packet are stored in storage unit 206 shown in FIG. 6 in association with each other.

Once the received packet and the identification information about MS 100 that transmitted the packet are stored in storage unit 206, an ICMP echo request packet is generated in step 25 by echo request packet generator 205 based on the packet.

Here, the ICMP echo request packet generated in echo request packet generator 205 will be described.

As described above, the ICMP echo request packet is an ICMP packet with the Type code "8." The size of the ICMP echo request packet is not larger than the MTU between BS 200 and ASNGW 300 so that it reaches ASNGW 300. Actually, allowing for sending back the packet from an apparatus further above ASNGW 300 (e.g., an apparatus connected to CSN 400), the size of the ICMP echo request packet is preferably sufficiently smaller than the MTU between BS 200 and ASNGW 300 (e.g., on the order of 100 bytes). Further, the ICMP echo request packet has check information stored therein. The check information is information for checking whether an ICMP echo reply packet received from ASNGW 300 has been transmitted as a reply to the generated ICMP echo request packet. The check information is information that allows the above check, and it serves as key information for identifying MS 100 and the processing timing of step 24 based on information about MS 100 such as the MAC address, and on the generation time or the like.

The ICMP echo request packet generated in this manner in echo request packet generator 205 is encapsulated with GRE in network interface unit 207 in step 26 and transmitted to ASNGW 300 in step 27.

Thereafter, when a packet is received from ASNGW 300, reception processing for the received packet is performed by BS 200 in step 3.

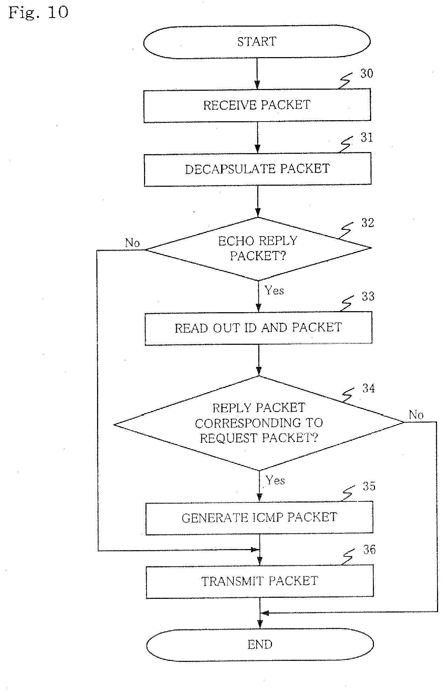

Details of this processing in step 3 will be described with reference to FIG. 10.

When the packet encapsulated and transmitted by ASNGW 300 is received in network interface unit 207 in step 30, the received packet is decapsulated by network interface unit 207 in step 31. The packet decapsulated in network interface unit 207 is output from network interface unit 207 to signal determination unit 208.

In step 32, it is determined in signal determination unit 208 whether the packet output from network interface unit 207 is an ICMP echo reply packet. This determination is made in a common manner, where it is determined whether the packet is an ICMP packet with the Type code "0."

If it is determined that the packet output from network interface unit 207 is an ICMP echo reply packet, the ICMP echo reply packet is output from signal determination unit 208 to check unit 209.

In step 33, check unit 209 reads out the received packet and the identification information about the MS that has transmitted the packet, stored in storage unit 206.

In step 34, check unit 209 checks whether the ICMP echo reply packet output from signal determination unit 208 has been transmitted as a reply to the ICMP echo request packet generated in echo request packet generator 205. By the check at this point, the correspondence between the ICMP echo request packet and the ICMP echo reply packet can be identified (determined). That is, for the received packet read out from storage unit 206 in step 33, the check information included in the ICMP echo request packet generated in step 25 is compared with the check information included in the ICMP echo reply packet output from signal determination unit 208.

If it is determined that the ICMP echo reply packet output from signal determination unit 208 has been transmitted as a reply to the ICMP echo request packet generated in echo request packet generator 205 (e.g., if the check information in the both packets matches), a service flow for transmission to MS 100, associated with a data path through which the ICMP echo reply packet has been carried, is identified from that data path, and an ICMP packet to be transmitted to MS 100 is generated by ICMP packet generator 210 in step 35. The ICMP packet generated here, which is in compliance with RFC 1191 (Path MTU Discovery), November 1990, includes part of the packet received from MS 100 in step 1 and indicates that the packet received from MS 100 cannot reach ASNGW 300, that is, the size of the packet is too large (Too-Big-Message). Specifically, it is an ICMP packet with the Type code "3" and the Code number "4." The generated ICMP packet includes information about the MTU of GRE (1472 bytes). The generated ICMP packet is output from ICMP packet generator 210 to wireless communicator 201 through the identified service flow.

In step 36, the ICMP packet output from ICMP packet generator 210 is transmitted from wireless communicator 201 to MS 100.

Thereafter, the MTU for MS 100 is changed in step 4 to 1472 bytes, which is the MTU between BS 200 and ASNGW 300, and a packet of the changed size is transmitted to BS 200 in step 5. Since the size of the transmitted packet is 1472 bytes or smaller, which is the MTU between BS 200 and ASNGW 300, the packet will not be discarded in BS 200.

The above-described processing in BS 200 may be performed in a logic circuit made for an intended purpose. It is also possible that a program in which details of the processing are written as a procedure is recorded on a recording medium readable by BS 200, and the program recorded on the recording medium is read into BS 200 and executed. The recording medium readable by BS 200 refers to a removable recording medium such as a floppy disk (registered trademark), magneto-optical disk, DVD, or CD, as well as memory such as ROM or RAM, an HDD, or the like provided in BS 200. The program recorded on the recording medium is read by a CPU (not shown) in BS 200 to perform the same processing as described above under the control of the CPU. Here, the CPU operates as a computer that executes the program read from the recording medium having the program stored thereon.

Thus, if a packet transmitted from MS 100 to BS 200 is larger in size than an MTU between BS 200 and ASNGW 300 and also if it cannot be fragmented into smaller packets, an echo request packet that conforms to the MTU is generated and transmitted to ASNGW 300. Thereafter, if an echo reply packet corresponding to the echo request packet is transmitted from ASNGW 300 to MS 200, an ICMP packet including the value of the MTU is generated and transmitted to MS 100. In this manner, MS 100 can automatically recognize the MTU between BS 200 and ASNGW 300. Then, a packet of a size that conforms to the MTU can be transmitted from MS 100 to BS 200.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

## Claims

1. A wireless base station (200) connecting a communication terminal (100) and a gateway apparatus (300), the wireless base station being provided with a function of associating service flow and data path and forwarding an IP packet, comprising:
an echo request packet generator (204) that generates, if a data packet that is larger in size than a maximum transmission unit used between the wireless base station and the gateway apparatus and that also cannot be fragmented is received from the communication terminal, an echo request packet of a size not larger than the maximum transmission unit for requesting confirmation of data packet arrival;
a network interface unit (207) that transmits the echo request packet to the gateway apparatus;
a check unit (209) that determines whether an echo reply packet received from the gateway apparatus as a reply confirming arrival via the network interface unit is a reply to the echo request packet;
an Internet Control Message Protocol, ICMP, packet generator (210) that generates an ICMP data packet including the maximum transmission unit and indicating the impossibility of arrival if the check unit determines that the echo reply packet is a reply to the echo request packet; and
a wireless communicator (201) that transmits the ICMP data packet to the communication terminal.

2. The wireless base station according to claim 1, further comprising a storage unit (206) that stores the data packet received from the communication terminal (100), wherein
the check unit (209) determines whether the echo reply packet is a reply to the echo request packet by matching predetermined information about the data packet stored in the storage unit with predetermined information included in the echo reply packet.

3. The wireless base station according to claim 1, wherein the ICMP packet generator (210) generates ICMP data packet of the same size as the data packet received from the communication terminal (100).

4. The wireless base station according to claim 1, further comprising:
a packet length determination unit (202) that determines whether the size of the data packet received from the communication terminal (100) is larger than the maximum transmission unit; and
a fragmentation determination unit (203) that determines whether the data packet determined by the packet length determination unit as larger than the maximum transmission unit can be fragmented.

5. The wireless base station according to claim 4, wherein the fragmentation determination unit (203) determines that the data packet cannot be fragmented if a flag, indicating whether fragmentation is possible included in the data packet determined by the packet length determination unit as larger than the maximum transmission unit, indicates that fragmentation is impossible.

6. The wireless base station according to claim 1 for use in a WiMAX system.

7. A wireless communication system, comprising:
the wireless base station (200) according to claim 1; and the gateway apparatus (300) connected with the wireless base station.

8. A method in a wireless base station (200) connecting a communication terminal (100) and a gateway apparatus (300), the wireless base station being provided with a function of associating service flow and data path and forwarding an IP packet, the method comprising:
(21) determining whether the size of a data packet received from the communication terminal is larger than a maximum transmission unit used between the wireless base station and the gateway apparatus;
(22) determining whether the data packet determined as larger than the maximum transmission unit can be fragmented;
(25) if it is determined that the data packet determined as larger than the maximum transmission unit cannot be fragmented, generating an echo request packet of a size not larger than the maximum transmission unit for requesting confirmation of data packet arrival;
(27) transmitting the echo request packet to the gateway apparatus;
(34) determining whether an echo reply packet received from the gateway apparatus as a reply confirming arrival is a reply to the echo request packet;
(35) if it is determined that the echo reply packet is a reply to the echo request packet, generating an Internet Control Message Protocol, ICMP, data packet that includes the maximum transmission unit and that indicates the impossibility of arrival; and
(36) transmitting the ICMP data packet to the communication terminal.

9. The method according to claim 8, further comprising:
storing the data packet received from the communication terminal;
matching predetermined information about the stored data packet with predetermined information included in the echo reply packet; and
determining whether the echo reply packet is a reply to the echo request packet based on the result of the matching.

10. The method according to claim 8, further comprising generating the ICMP data packet of the same size as the data packet received from the communication terminal.

11. The method according to claim 8, further comprising determining that the data packet cannot be fragmented if a flag indicating whether fragmentation is possible included in the data packet determined as larger than the maximum transmission unit indicates that fragmentation is impossible.

12. A recording medium for recording a program for causing a wireless base station (200) connecting a communication terminal (100) and a gateway apparatus (300), the wireless base station being provided with a function of associating service flow and data path and forwarding an IP packet, to perform the processes of:
(21) determining whether the size of a data packet received from the communication terminal is larger than a maximum transmission unit used between the wireless base station and the gateway apparatus;
(22) determining whether the data packet determined as larger than the maximum transmission unit can be fragmented;
(25) if it is determined that the data packet determined as larger than the maximum transmission unit cannot be fragmented, generating an echo request packet of a size not larger than the maximum transmission unit for requesting confirmation of data packet arrival;
(27) transmitting the echo request packet to the gateway apparatus;
(34) determining whether an echo reply packet received from the gateway apparatus as a reply confirming arrival is a reply to the echo request packet;
(35) if it is determined that the echo reply packet is a reply to the echo request packet, generating an Internet Control Message Protocol, ICMP, data packet that includes the maximum transmission unit and that indicates the impossibility of arrival; and
(36) transmitting the ICMP data packet to the communication terminal.

13. The recording medium according to claim 12 for recording a program, further causing the wireless base station to perform the processes of:
storing the data packet received from the communication terminal;
matching predetermined information about the stored data packet with predetermined information included in the echo reply packet; and
determining whether the echo reply packet is a reply to the echo request packet based on the result of the matching.

14. The recording medium according to claim 12 for recording a program, further causing the wireless base station to perform the process of generating the ICMP data packet of the same size as the data packet received from the communication terminal.

15. The recording medium according to claim 12 for recording a program, further causing the wireless base station to perform the process of determining that the data packet cannot be fragmented if a flag indicating whether fragmentation is possible included in the data packet determined as larger than the maximum transmission unit indicates that fragmentation is impossible.

## Patentansprüche

1. Drahtlos-Basisstation (200), die ein Kommunikationsendgerät (100) und eine Gateway-Vorrichtung (300) verbindet, wobei die Drahtlos-Basisstation eine Funktion zum Zuweisen eines Dienstflusses und eines Datenpfads und zum Weiterleiten eines IP-Pakets aufweist, mit:
einem Echoanforderungspaketgenerator (204), der, wenn ein Datenpaket mit einer Größe, die größer ist als eine zwischen der Drahtlos-Basisstation und der Gateway-Vorrichtung verwendete maximale Übertragungseinheit, und die auch nicht fragmentiert werden kann, vom Kommunikationsendgerät empfangen wird, ein Echoanforderungspaket mit einer Größe, die nicht größer ist als die maximale Übertragungseinheit, zum Anfordern einer Bestätigung des Datenpaketeingangs erzeugt;
einer Netzwerkschnittstelleneinheit (207), die das Echoanforderungspaket an die Gateway-Vorrichtung überträgt;
einer Prüfeinheit (209), die bestimmt, ob ein Echoantwortpaket, das von der Gateway-Vorrichtung als eine den Dateneingang bestätigende Antwort über die Netzwerkschnittstelleneinheit empfangen wird, eine Antwort auf das Echoanforderungspaket ist;
einem ICMP- (Internet Control Message Protocol) Paketgenerator (210), der ein ICMP-Datenpaket erzeugt, das die maximale Übertragungseinheit enthält und die Unmöglichkeit eines Dateneingangs anzeigt, wenn die Prüfeinheit bestimmt, dass das Echoantwortpaket eine Antwort auf das Echoanforderungspaket ist; und
einem Drahtlos-Communicator (201), der das ICMP-Datenpaket an das Kommunikationsendgerät überträgt.

2. Drahtlos-Basisstation nach Anspruch 1, ferner mit einer Speichereinheit (206), die das vom Kommunikationsendgerät (100) empfangene Datenpaket speichert, wobei
die Prüfeinheit (209) durch Abgleichen vorgegebener Information über das in der Speichereinheit gespeicherte Datenpaket mit im Echoantwortpaket enthaltener vorgegebener Information bestimmt, ob das Echoantwortpaket eine Antwort auf das Echoanforderungspaket ist.

3. Drahtlos-Basisstation nach Anspruch 1, wobei der ICMP-Paketgenerator (210) ein ICMP-Datenpaket mit der gleichen Größe wie diejenige des vom Kommunikationsendgerät (100) empfangenen Datenpakets erzeugt.

4. Drahtlos-Basisstation nach Anspruch 1, ferner mit:
einer Paketlängenbestimmungseinheit (202), die bestimmt, ob die Größe des vom Kommunikationsendgerät (100) empfangenen Datenpakets größer ist als die maximale Übertragungseinheit; und
einer Fragmentierungsbestimmungseinheit (203), die bestimmt, ob das Datenpaket, für das die Paketlängenbestimmungseinheit bestimmt hat, dass es größer ist als die maximale Übertragungseinheit, fragmentiert werden kann.

5. Drahtlos-Basisstation nach Anspruch 4, wobei die Fragmentierungsbestimmungseinheit (203) bestimmt, dass das Datenpaket nicht fragmentiert werden kann, wenn ein Flag, das anzeigt, ob eine Fragmentierung möglich ist, und das in dem Datenpaket enthalten ist, für das die Paketlängenbestimmungseinheit bestimmt hat, dass es größer ist als die maximale Übertragungseinheit, anzeigt, dass eine Fragmentierung unmöglich ist.

6. Drahtlos-Basisstation nach Anspruch 1 zur Verwendung in einem WiMAX-System.

7. Drahtlos-Kommunikationssystem mit:
der Drahtlos-Basisstation (200) nach Anspruch 1; und
der mit der Drahtlos-Basisstation verbundenen Gateway-Vorrichtung (300).

8. Verfahren in einer Drahtlos-Basisstation (200), die ein Kommunikationsendgerät (100) und eine Gateway-Vorrichtung (300) verbindet, wobei die Drahtlos-Basisstation eine Funktion zum Zuweisen eines Dienstflusses und eines Datenpfads und zum Weiterleiten eines IP-Pakets aufweist, wobei das Verfahren die Schritte aufweist:
(21) Bestimmen, ob die Größe eines vom Kommunikationsendgerät empfangenen Datenpakets größer ist als eine zwischen der Drahtlos-Basisstation und der Gateway-Vorrichtung verwendete maximale Übertragungseinheit;
(22) Bestimmen, ob das Datenpaket, für das bestimmt wurde, dass es größer ist als die maximale Übertragungseinheit, fragmentiert werden kann;
(25) wenn bestimmt wird, dass das Datenpaket, für das bestimmt wurde, dass es größer ist als die maximale Übertragungsrate, nicht fragmentiert werden kann: Erzeugen eines Echoanforderungspakets mit einer Größe, die nicht größer ist als die maximale Übertragungseinheit, zum Anfordern einer Bestätigung eines Datenpaketeingangs;
(27) Übertragen des Echoanforderungspakets an die Gateway-Vorrichtung;
(34) Bestimmen, ob ein Echoantwortpaket, das von der Gateway-Vorrichtung als eine den Dateneingang bestätigende Antwort empfangen wird, eine Antwort auf das Echoanforderungspaket ist;
(35) wenn bestimmt wird, dass das Echoantwortpaket eine Antwort auf das Echoanforderungspaket ist: Erzeugen eines ICMP- (Internet Control Message Protocol) Datenpakets, das die maximale Übertragungseinheit enthält und die Unmöglichkeit eines Dateneingangs anzeigt; und
(36) Übertragen der ICMP-Paketdaten an das Kommunikationsendgerät.

9. Verfahren nach Anspruch 8, ferner mit den Schritten:
Speichern des vom Kommunikationsendgerät empfangenen Datenpakets;
Abgleichen vorgegebener Information über das gespeicherte Datenpaket mit im Echoantwortpaket enthaltener vorgegebener Information; und
Bestimmen, ob das Echoantwortpaket eine Antwort auf das Echoanforderungspaket ist, basierend auf dem Abgleichergebnis.

10. Verfahren nach Anspruch 8, ferner mit dem Schritt zum Erzeugen des ICMP-Datenpakets mit der gleichen Größe wie diejenige des vom Kommunikationsendgerät empfangenen Datenpakets.

11. Verfahren nach Anspruch 8, ferner mit dem Schritt zum Bestimmen, dass das Datenpaket nicht fragmentiert werden kann, wenn ein Flag, das anzeigt, ob eine Fragmentierung möglich ist, und das in dem Datenpaket enthalten ist, für das bestimmt wurde, dass es größer ist als die maximale Übertragungseinheit, anzeigt, dass eine Fragmentierung unmöglich ist.

12. Speichermedium zum Speichern eines Programms, das eine Drahtlos-Basisstation (200), die ein Kommunikationsendgerät (100) und eine Gateway-Vorrichtung (300) verbindet, wobei die Drahtlos-Basisstation eine Funktion zum Zuordnen eines Dienstflusses und eines Datenpfads und zum Weiterleiten eines IP-Pakets aufweist, veranlasst, die folgenden Prozesse auszuführen:
(21) Bestimmen, ob die Größe eines vom Kommunikationsendgerät empfangenen Datenpakets größer ist als eine zwischen der Drahtlos-Basisstation und der Gateway-Vorrichtung verwendete maximale Übertragungseinheit;
(22) Bestimmen, ob das Datenpaket, für das bestimmt wurde, dass es größer ist als die maximale Übertragungseinheit, fragmentiert werden kann;
(25) wenn bestimmt wird, dass das Datenpaket, für das bestimmt wurde, dass es größer ist als die maximale Übertragungsrate, nicht fragmentiert werden kann: Erzeugen eines Echoanforderungspakets mit einer Größe, die nicht größer ist als die maximale Übertragungseinheit, zum Anfordern einer Bestätigung eines Datenpaketeingangs;
(27) Übertragen des Echoanforderungspakets an die Gateway-Vorrichtung;
(34) Bestimmen, ob ein Echoantwortpaket, das von der Gateway-Vorrichtung als eine den Dateneingang bestätigende Antwort empfangen wird, eine Antwort auf das Echoanforderungspaket ist;
(35) wenn bestimmt wird, dass das Echoantwortpaket eine Antwort auf das Echoanforderungspaket ist: Erzeugen eines ICMP- (Internet Control Message Protocol) Datenpakets, das die maximale Übertragungseinheit enthält und die Unmöglichkeit eines Dateneingangs anzeigt; und
(36) Übertragen des ICMP-Datenpakets an das Kommunikationsendgerät.

13. Speichermedium nach Anspruch 12 zum Speichern eines Programms, das die Drahtlos-Basisstation ferner veranlasst, die Prozesse auszuführen:
Speichern des vom Kommunikationsendgerät empfangenen Datenpakets;
Abgleichen vorgegebener Information über das gespeicherte Datenpaket mit im Echoantwortpaket enthaltener vorgegebener Information; und
Bestimmen, ob das Echoantwortpaket eine Antwort auf das Echoanforderungspaket ist, basierend auf dem Abgleichergebnis.

14. Speichermedium nach Anspruch 12 zum Speichern eines Programms, das die Drahtlos-Basisstation ferner veranlasst, den Prozess zum Erzeugen des ICMP-Datenpakets mit der gleichen Größe wie diejenige des vom Kommunikationsendgerät empfangenen Datenpakets auszuführen.

15. Speichermedium nach Anspruch 12 zum Speichern eines Programms, das die Drahtlos-Basisstation ferner veranlasst, den Prozess auszuführen, durch den bestimmt wird, dass das Datenpaket nicht fragmentiert werden kann, wenn ein Flag, das anzeigt, ob eine Fragmentierung möglich ist, und das in dem Datenpaket enthalten ist, für das bestimmt wurde, dass es größer ist als die maximale Übertragungseinheit, anzeigt, dass eine Fragmentierung unmöglich ist.

## Revendications

1. Station de base sans fil (200) connectant un terminal de communication (100) et un appareil de passerelle (300), la station de base sans fil étant pourvue d'une fonction d'association de flux de service et de chemin de données et d'acheminement d'un paquet IP, comprenant :
un générateur de paquet de demande d'écho (204) qui génère, si un paquet de données qui est de taille supérieure à une unité de transmission maximale utilisée entre la station de base sans fil et l'appareil de passerelle et qui ne peut également pas être fragmenté est reçu depuis le terminal de communication, un paquet de demande d'écho d'une taille non supérieure à l'unité de transmission maximale pour demander confirmation de l'arrivée d'un paquet de données ;
une unité d'interface réseau (207) qui transmet le paquet de demande d'écho à l'appareil de passerelle ;
une unité de vérification (209) qui détermine si un paquet de réponse d'écho reçu depuis l'appareil de passerelle, en tant que réponse confirmant l'arrivée via l'unité d'interface réseau, est une réponse au paquet de demande d'écho ;
un générateur de paquet de protocole de message de contrôle Internet, ICMP (210), qui génère un paquet de données ICMP incluant l'unité de transmission maximale et indiquant l'impossibilité d'arrivée si l'unité de vérification détermine que le paquet de réponse d'écho est une réponse au paquet de demande d'écho ; et
un communicateur sans fil (201) qui transmet le paquet de données ICMP au terminal de communication.

2. Station de base sans fil selon la revendication 1, comprenant en outre une unité de stockage (206) qui stocke le paquet de données reçu depuis le terminal de communication (100), dans laquelle
l'unité de vérification (209) détermine si le paquet de réponse d'écho est une réponse au paquet de demande d'écho par confrontation d'informations prédéterminées à propos du paquet de données stocké dans l'unité de stockage avec des informations prédéterminées incluses dans le paquet de réponse d'écho.

3. Station de base sans fil selon la revendication 1, dans laquelle le générateur de paquet ICMP (210) génère un paquet de données ICMP de la même taille que le paquet de données reçu depuis le terminal de communication (100).

4. Station de base sans fil selon la revendication 1, comprenant en outre :
une unité de détermination de longueur de paquet (202) qui détermine si la taille du paquet de données reçu depuis le terminal de communication (100) est plus grande que l'unité de transmission maximale ; et
une unité de détermination de fragmentation (203) qui détermine si le paquet de données déterminé par l'unité de détermination de longueur de paquet comme étant aussi grand que l'unité de transmission maximale peut être fragmenté.

5. Station de base sans fil selon la revendication 4, dans laquelle l'unité de détermination de fragmentation (203) détermine que le paquet de données ne peut pas être fragmenté si un drapeau indiquant si une fragmentation est possible, y compris dans le paquet de données déterminé par l'unité de détermination de longueur de paquet comme étant aussi grand que l'unité de transmission maximale, indique que la fragmentation est impossible.

6. Station de base sans fil selon la revendication 1, à utiliser dans un système WiMAX.

7. Système de communication sans fil, comprenant :
la station de base sans fil (200) selon la revendication 1 ; et
l'appareil de passerelle (300) connecté à la station de base sans fil.

8. Procédé dans une station de base sans fil (200) connectant un terminal de communication (100) et un appareil de passerelle (300), la station de base sans fil étant pourvue d'une fonction d'association de flux de service et de chemin de données et d'acheminement d'un paquet IP, le procédé comprenant :
(21) le fait de déterminer si la taille d'un paquet de données reçu depuis le terminal de communication est plus grande qu'une unité de transmission maximale utilisée entre la station de base sans fil et l'appareil de passerelle ;
(22) le fait de déterminer si le paquet de données déterminé comme étant plus grand que l'unité de transmission maximale peut être fragmenté ;
(25) s'il est déterminé que le paquet de données déterminé comme étant plus grand que l'unité de transmission maximale ne peut pas être fragmenté, la génération d'un paquet de demande d'écho d'une taille pas plus grande que l'unité de transmission maximale pour demander une confirmation d'une arrivée de paquet de données ;
(27) la transmission du paquet de demande d'écho à l'appareil de passerelle ;
(34) le fait de déterminer si un paquet de réponse d'écho reçu depuis l'appareil de passerelle en tant que réponse confirmant une arrivée est une réponse à la demande d'écho ;
(35) s'il est déterminé que le paquet de réponse d'écho est une réponse au paquet de demande d'écho, la génération d'un paquet de données de protocole de message de contrôle Internet, ICMP, qui inclut l'unité de transmission maximale et qui indique l'impossibilité d'arrivée ; et
(36) la transmission du paquet de données ICMP au terminal de communication.

9. Procédé selon la revendication 8, comprenant en outre :
le stockage du paquet de données reçu depuis le terminal de communication ;
la confrontation d'informations prédéterminées à propos du paquet de données stocké avec des informations prédéterminées incluses dans le paquet de réponse d'écho ; et
le fait de déterminer si le paquet de réponse d'écho est une réponse au paquet de demande d'écho sur la base du résultat de la confrontation.

10. Procédé selon la revendication 8, comprenant en outre la génération du paquet de données ICMP de la même taille que le paquet de données reçu depuis le terminal de communication.

11. Procédé selon la revendication 8, comprenant en outre le fait de déterminer que le paquet de données ne peut pas être fragmenté si un drapeau indiquant si une fragmentation est possible, y compris dans le paquet de données déterminé comme étant plus grand que l'unité de transmission maximale, indique qu'une fragmentation est impossible.

12. Support d'enregistrement pour enregistrer un programme afin d'amener une station de base sans fil (200) connectant un terminal de communication (100) et un appareil de passerelle (300), la station de base sans fil étant pourvue d'une fonction d'association de flux de service et de chemin de données et d'acheminement d'un paquet IP, à réaliser les processus suivants :
(21) le fait de déterminer si la taille d'un paquet de données reçu depuis le terminal de communication est plus grande qu'une unité de transmission maximale utilisée entre la station de base sans fil et l'appareil de passerelle ;
(22) le fait de déterminer si le paquet de données déterminé comme étant plus grand que l'unité de transmission maximale peut être fragmenté ;
(25) s'il est déterminé que le paquet de données déterminé comme étant plus grand que l'unité de transmission maximale ne peut pas être fragmenté, la génération d'un paquet de demande d'écho d'une taille pas plus grande que l'unité de transmission maximale pour demander une confirmation d'une arrivée de paquet de données ;
(27) la transmission du paquet de demande d'écho à l'appareil de passerelle ;
(34) le fait de déterminer si un paquet de réponse d'écho reçu depuis l'appareil de passerelle en tant que réponse confirmant une arrivée est une réponse à la demande d'écho ;
(35) s'il est déterminé que le paquet de réponse d'écho est une réponse au paquet de demande d'écho, la génération d'un paquet de données de protocole de message de contrôle Internet, ICMP, qui inclut l'unité de transmission maximale et qui indique l'impossibilité d'arrivée ; et
(36) la transmission du paquet de données ICMP au terminal de communication.

13. Support d'enregistrement selon la revendication 12, pour enregistrer un programme, amenant en outre la station de base sans fil à réaliser les processus suivants :
le stockage du paquet de données reçu depuis le terminal de communication ;
la confrontation d'informations prédéterminées à propos du paquet de données stocké avec des informations prédéterminées incluses dans le paquet de réponse d'écho ; et
le fait de déterminer si le paquet de réponse d'écho est une réponse au paquet de demande d'écho d'après le résultat de la confrontation.

14. Support d'enregistrement selon la revendication 12, pour enregistrer un programme, amenant en outre la station de base sans fil à réaliser le processus de génération du paquet de données ICMP de la même taille que le paquet de données reçu depuis le terminal de communication.

15. Support d'enregistrement selon la revendication 12, pour enregistrer un programme, amenant en outre la station de base sans fil à réaliser le processus de détermination du fait que le paquet de données ne peut pas être fragmenté si un drapeau indiquant si une fragmentation est possible, y compris dans le paquet de données déterminé comme étant plus grande que l'unité de transmission maximale, indique qu'une fragmentation est impossible.
